**Europäisches Patentamt**

**European Patent Office**

**Office européen des brevets**

(19)

(11) Veröffentlichungsnummer : **0 343 472 B1**

(12) **EUROPÄISCHE PATENTSCHRIFT**

(45) Veröffentlichungstag der Patentschrift :
14.10.92 Patentblatt 92/42

(51) Int. Cl.⁵ : **B65B 43/26, B65B 1/18**

(21) Anmeldenummer : **89108682.9**

(22) Anmeldetag : **13.05.89**

(54) **Einrichtung zum Füllen und Palettieren von Ventilsäcken und Anwendung dieser Einrichtung.**

(30) Priorität : **26.05.88 DE 3817792**

(43) Veröffentlichungstag der Anmeldung :
**29.11.89 Patentblatt 89/48**

(45) Bekanntmachung des Hinweises auf die
Patenterteilung :
**14.10.92 Patentblatt 92/42**

(84) Benannte Vertragsstaaten :
**BE FR GB NL**

(56) Entgegenhaltungen :
**FR-E- 92 773**
**GB-A- 940 315**
**US-A- 3 691 715**

(73) Patentinhaber : **BEHN MASCHINENFABRIK
GmbH & Co KG
Diessemer Strasse 59 - 71
W-4150 Krefeld (DE)**

(72) Erfinder : **Schöche, Horst, Dipl.-Ing.
Forstwaldstrasse 606
W-4150 Krefeld (DE)**

(74) Vertreter : **Rehders, Jochen, Dipl.-Ing.
Stresemannstrasse 28
W-4000 Düsseldorf 1 (DE)**

## Beschreibung

Die Erfindung betrifft eine Einrichtung zum Füllen und Palettieren von Ventilsäcken. Sie bezieht sich ferner auf eine besonders vorteilhafte Anwendung einer solchen Einrichtung.

Es sind Vorrichtungen zum Aufstecken eines Ventilsackes auf eine Fülldüse bekannt (US-PSn 3 466 837 und 3 715 858). Nach dem Füllen des Sackes wird dieser auf ein Transportband abgeworfen, von dem eine weitere Einrichtung den Sack erfaßt und auf einer Palette palettiert.

Diesem Stand der Technik gegenüber besteht die Aufgabe der Erfindung darin, eine Einrichtung zu schaffen, mit der mit konstruktiv einfachen und problemlos zu handhabenden Mitteln das Füllen des Sackes und das anschließende Transportieren und Palettieren des gefüllten Ventilsackes auf kurzen Wegen erfolgen kann.

Zur Lösung dieser Aufgabe sieht die Erfindung die Merkmale des kennzeichnenden Teils des Hauptanspruches vor. Die Gegenstandsmerkmale der Unteransprüche dienen der Verbesserung und Weiterentwicklung der Merkmale des Hauptanspruches. - Der auf die Anwendung der Einrichtung gerichtete Anspruch gibt Verfahrensschritte wieder, die der vorteilhaften Benutzung der Einrichtung nach der Erfindung dienen.

Das Wesen der Einrichtung nach der Erfindung offenbart sich darin, daß deren Kopf sowohl die Vorrichtung zur Aufnahme des Sackes von einem Sackstapel in Form z. B. eines Saugkopfes aufweist, wie auch eine Vorrichtung zum Erfassen des gefüllten Sackes, um diesen von der Fülldüse abzuziehen und zu der Palette zu transportieren, wo er lagegerecht palettiert wird, d. h. in seine Stapelposition gebracht wird. Die Einrichtung nach der Erfindung erfüllt damit drei Funktionen, die bislang stets von drei getrennten Einrichtungen durchgeführt wurden, nämlich die Vorrichtung zum Ansaugen und Aufstecken des leeren Sackes auf die Fülldüse, eine Vorrichtung zum Abwerfen oder Abnehmen des gefüllten Sackes von der Fülldüse und für den Transport bis zur Palette und eine dritte Einrichtung zum Erfassen des Sackes und zum Palettieren auf einer Palette.- Die zweite und dritte Einrichtung kann bei Bandpacken mit erheblichem technischen Aufwand zusammengefaßt werden.

Auf der Zeichnung sind Ausführungsbeispiele der erfindungsgemäßen Einrichtung und die einzelnen Anwendungsschritte der Einrichtung dargestellt und zwar zeigt

Fig. 1 und 2 die Einrichtung nach der Erfindung in Seiten- und Vorderansicht,

Fig. 3 und 4 die Einrichtung nach dem Erfassen eines leeren Ventilsackes und Abziehen desselben von einem Sackstapel sowie das Ergreifen des gefüllten Sackes,

Fig. 5 und 6 das Aufstecken des leeren Sackes auf die Fülldüse, wobei die Greifereinrichtung den vollen Sack erfaßt hält und den Abtransport und das Palettieren des gefüllten Sackes, nachdem der leere, neu zu füllende Sack auf der Fülldüse verblieben ist und dort zwischenzeitlich gefüllt wird,

Fig. 7 eine weitere Ausführungsform der Einrichtung nach der Erfindung, bei der die Saugeinrichtung für den zu füllenden Sack im oberen Bereich der Greifereinrichtung an deren Rückseite angeordnet ist und

Fig. 8 bis 10 die Vorrichtung zum Erfassen des vollen Ventilsackes und

Fig. 11 eine schematische Darstellung des Arbeitsablaufes der Einrichtung nach der Erfindung.

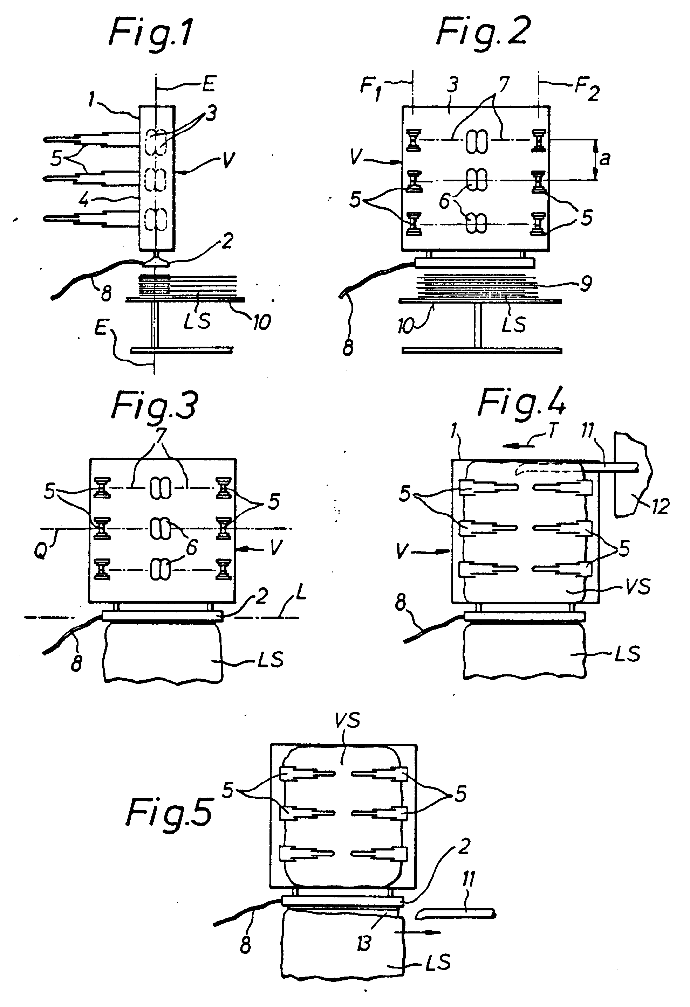

Die Einrichtung nach der Erfindung umfaßt im wesentlichen eine Greifervorrichtung 1 und eine Saugvorrichtung 2. Die Greifervorrichtung 1 besitzt eine plattenförmige Tragwand 3 sowie an deren Vorderseite 4 eine Reihe von Greiferfingern 5, die vorzugsweise im Abstand a übereinander paarweise angeordnet sind, wodurch sich zwei übereinandergelegene Fingerreihen $F_1$ und $F_2$ ergeben. Die Finger 5 können aus der in Fig. 1 und 2 dargestellten gestreckten Lage in die Lage nach Fig. 4 und 5 gebracht werden, in der sie einen gefüllten Sack VS für die später noch zu erläuternde Abnahme von der Fülldüse und für den Transport und das Palettieren beidseitig umfassen. Mit Hilfe geeigneter Zug- oder Druckmittelaggregate 6 können über Zug- oder Schubmittel 7 die Finger in der beschriebenen Weise betätigt werden. - Statt der vorbeschriebenen Greifervorrichtung kann auch jede andere Greifervorrichtung Anwendung finden, so z. B. eine solche mit Klappen oder Klappwänden, die die Wirkung haben, wie sie vorstehend beschrieben worden ist, nämlich den gefüllten Sack von der Düse abzuziehen, zu transportieren und zu palettieren.

Den in horizontalen Ebenen parallel zueinander angeordneten Fingern 5 ist die Saugvorrichtung 2 zugeordnet, die bekannter Art sein kann und die über eine Leitung 8 mit einer Pumpe od. dgl. verbunden ist, um das Ventil 9 des obersten leeren Sackes LS von auf einem Tisch 10 gestapelten Ventilsäcken zu erfassen.

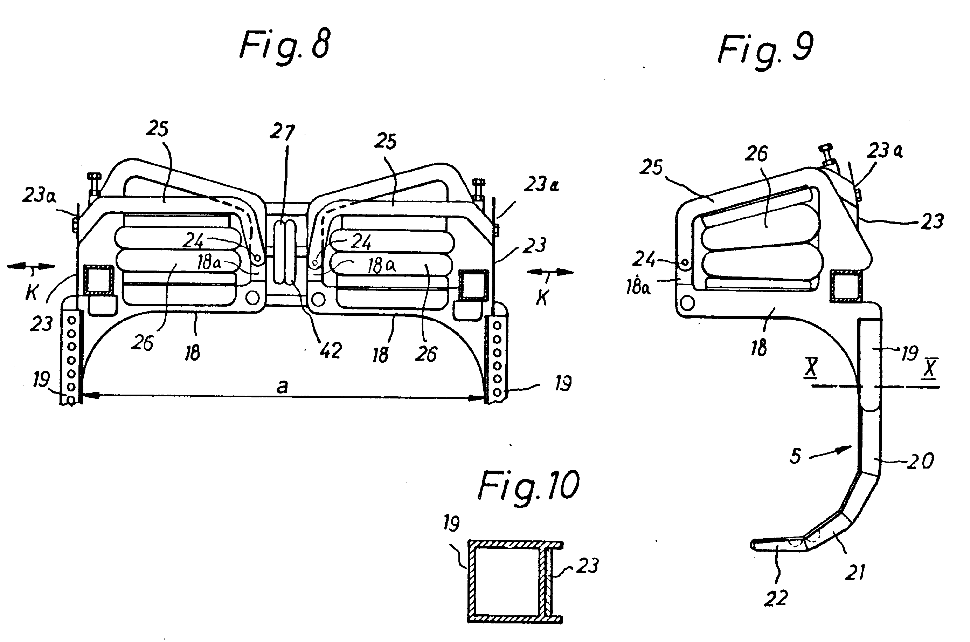

In Fig. 3 ist dargestellt, daß die Saugvorrichtung 2 einen leeren Sack LS erfaßt hat und die Finger 5 in geöffneter, gestreckter Lage sich befinden. In dieser Stellung der Teile wird die Einrichtung V derart bewegt, daß die Greifervorrichtung 1 einen auf der Fülldüse 11 einer Fülleinrichtung 12 hängenden, gefüllten Sack VS mit den Fingern 5 umfaßt, so daß die Greifervorrichtung den gefüllten Sack von der Düse 11 einer Fülleinrichtung 12 - in Richtung des Pfeiles T - abziehen kann. In weiterer Anwendung der Einrichtung V wird diese derart bewegt, daß der leere Ventilsacke LS bei vorher in bekannter Weise geöffnetem Ventil 13 auf die Fülldüse 11 aufgeschoben werden kann, um das Füllgut aufzunehmen. - Im weiteren Verlauf der Arbeit mit der erfindungsgemäßen Einrichtung wird diese bis an die Palettierstelle P auf einer Palette 14 bewegt (Fig. 6). Hierbei liegt die Greifervorrichtung 1 horizontal und die Saugvorrichtung 2 mit ihrem wirksamen Teil in vertikaler Ebene. Beim Öffnen der Finger 5 der Greifervorrichtung 1 gleitet der gefüllte Sack VS sehr genau in die Palettierstelle P auf der Palette 14 z. B. zwischen zwei Säcke.

Die Vorrichtung zum Ergreifen des vollen Sackes besitzt die beiden Greiferfinger 5, die auf einer gemeinsamen horizontalen Ebene gelegen sind. Vorzugsweise sind mehrere dieser paarweisen Finger 5 übereinander in dem mittleren Längsbereich des Sackes vorgesehen, so daß z. B. ein Greiferpaar in der Längsmitte des Sackes angreift und zwei weitere Fingerpaare ungefähr eine gespreizte Handbreite darüber und darunter den Sack umschließen. Das Umschließen des Sackes mit allen Fingern erfolgt ebenso wie das Öffnen der Finger zu gleicher Zeit, so z. B. um den gefüllten Sack abzulegen. Hierzu ist der Tragarm, an dem die Vorrichtung 1 angebracht ist, derart schwenkbar und/oder drehbar, daß sie mit ihren Greiferfingern 5 eine horizontale Lage und eine vertikale Lage einnehmen kann, um z. B. den Sack zu palettieren.

Im einzelnen weist die Vorrichtung 1 zwei gleiche, in Bezug auf die Mittelebene M drehsymmetrisch angeordnete Tragteile 18 auf, die im Abstand a voneinander zwei feste Grundglieder 19 tragen. An diesen ist das bewegliche Fingerglied 20 angeordnet, an welchem das Glied 21 und an diesem das bewegliche Endglied 22 schwenkbar angebracht ist. Die beweglichen Fingerglieder werden mittels eines Metallbandes 23 gestreckt bzw. gekrümmt, dessen Ende 23a an einem bei 24 schwenkbaren Hebel 25 angeschlagen ist. Dieser Hebel kann durch ein Aggregat, hier einem Doppelbalg 26, verschwenkt werden. - Um den Abstand a zwischen den beiden Grundgliedern 18 der Breite des gefüllten Sackes anpassen zu können, ist zwischen den Tragteilen 18 bzw. deren Abschnitten 18a eine weiterer Doppelbalg 27 vorgesehen, bei dessen Betätigung die Tragteile 18 und die Grundglieder 19 in Richtung der Doppelpfeile K verstellbar sind.

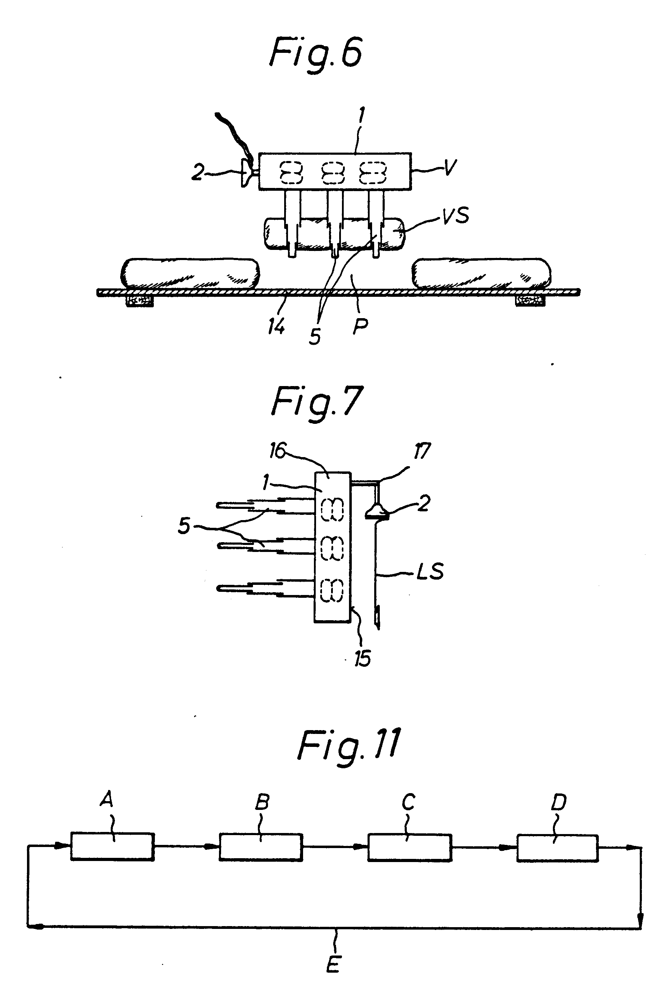

Die Einrichtung nach der Erfindung ist an einem allseitig bewegten Tragarm angeordnet, wie sie hinlänglich bekannt sind, ohne daß es hierzu eines Nachweises bedarf. Die Einrichtung ist an dem vorderen Ende dieses Tragarmes als Kopf angeordnet und weist die beiden Teile 1 und 2, nämlich die Greifereinrichtung für den gefüllten Sack und die Saugeinrichtung für den leeren Sack auf. Wesentlich ist, daß die beiden Teile 1 und 2 in fester und enger räumlicher Anordnung zueinander vorgesehen sind. Während bei der Ausführungsform nach Fig. 1 bis 6 die Saugvorrichtung in der Ebene E der Tragwand 3 der Greifervorrichtung angeordnet ist, ist bei der Ausführungsform nach Fig. 7 die Saugvorrichtung 2 an der Rückseite 15 der Greifereinrichtung 1 in deren oberen Bereich 16 z. B. mittels eines Winkelhebels 17 angeordnet. Die Einrichtung macht bei dieser Anordnung eine entsprechende Bewegung, um das Aufziehen und Füllen des leeren Sackes und das Abziehen, Transportieren und Palettieren des vollen Sackes zu bewerkstelligen, wie dies in schematischer Ansicht in Fig. 11 wiedergegeben ist. In der Position A wird der Leersack LS von der Saugvorrichtung 2, die beliebiger bekannter Art sein kann, angesaugt.

In der Position B nach Fig. 11 wird der volle Sack gemäß Fig. 4 erfaßt und von der Fülldüse 11 abgezogen; daran anschließend wird der leere Sack LS gemäß Fig. 5 in die Position C auf die Fülldüse geschoben, anschließend der gefüllte Sack transportiert und nach Fig. 6 in der Position D palettiert. Hiernach kehrt die leere Einrichtung über den Weg E wieder zu dem Stapel der leeren Säcke auf dem Tisch 10 zurück und der Arbeitszyklus beginnt von neuem.

Die Figuren der Zeichnung verdeutlichen, daß es vorteilhaft ist, die Saugvorrichtung 2 mit ihrer Längsachse L parallel zur mittleren Querachse Q der Greifervorrichtung 1 verlaufen zu lassen (Fig. 3).

## Patentansprüche

1. Einrichtung zum Füllen und Palettieren von Ventilsäcken, gekennzeichnet durch einen allseitig bewegbaren Tragarm mit einem an seinem vorderen Armende angeordneten Kopf aus einer den Leeren Sack ansangenden Saugvorrichtung (2) und einer den gefüllten Sack (VS) erfassenden, transportierenden und palettierenden Sackgreifvorrichtung (1), wobei die Saugvorrichtung (2) und die Greifervorrichtung (1) in fester räumlicher Anordnung gemeinsam an dem Kopf angeordnet sind.

2. Einrichtung nach Anspruch 1, dadurch gekennzeichnet, daß die rohr- oder stabförmige Saugvorrichtung (2) in der Ebene (E) oder seitlich oberhalb oder unterhalb der Greifervorrichtung an der Greifervorrichtung (1) angebracht ist.

3. Einrichtung nach Anspruch 1 und 2, dadurch gekennzeichnet, daß eine horizontale Quermittelachse (Q) der Greifervorrichtung (1) parallel zur Längsachse (L) der Saugvorrichtung (2) gelegen ist.

4. Einrichtung nach Anspruch 1 und einem der Ansprüche 2 oder 3, dadurch gekennzeichnet, daß die Greifervorrichtung (1) seitliche schwenkbare, den gefüllten Sack mindestens teilweise umschließende Finger (5) oder Klappen aufweist, deren Schwenkbewegung in oder parallel zur Quermittelachse (Q) der Greifervorrichtung (1) bzw. zur Längsachse (L) der Saugvorrichtung (2) gelegenen Ebenen vorgesehen ist.

5. Einrichtung nach Anspruch 1 und 2, dadurch gekennzeichnet, daß die Greifervorrichtung (1) einen Saugkopf aufweist, der die eine Seite eines leeren Sackes (LS) erfaßt.

6. Vorrichtung nach Anspruch 1 und einem der Ansprüche 2 bis 5, dadurch gekennzeichnet, daß die Sackgreifvorrichtung (1) paarweise in einer gemeinsamen Horizontal- oder Vertikalebene des Sackes im Abstand der Sackbreite oder -länge (a) angeordnete, aus einer gestreckten in eine gekrümmte, den Sack mindestens teilweise umfassende Stellung bewegbare Finger (5) besitzt.

7. Anwendung der Einrichtung nach Anspruch 1, dadurch gekennzeichnet, daß die Saugvorrichtung (2) einen leeren Sack (LS) von einem Sackstapel aufnimmt, die Greifervorrichtung (1) einen gefüllten Sack (VS) von der Fülldüse (11) abzieht, der leere Sack (LS) auf die Düse (11) geschoben und der gefüllte Sack (VS) durch die Greifervorrichtung (1) abtransportiert und palettiert wird.

## Claims

1. Apparatus for filling and palleting valve bags, characterized by a universally movable carrier arm with a head, arranged on its front arm end, of a suction device (2) drawing in the empty bag and a bag gripping device (1) grasping, transporting and palleting the filled bag (VS), the suction device (2) and the gripper device (1) being arranged together on the head in a fixed spatial arrangement.

2. Apparatus according to claim 1, characterized in that the tubular or rod-shaped suction device (2) is fitted to the gripper device (1) in the plane (E) or laterally above or below the gripper device.

3. Apparatus according to claim 1 and 2, characterized in that a horizontal transverse central axis (Q) of the gripper device (1) is situated parallel to the longitudinal axis (L) of the suction device (2).

4. Apparatus according to claim 1 and one of claims 2 or 3, characterized in that the gripper device (1) has lateral, pivotable fingers (5) or flaps which surround the filled bag at least partially and the pivotal movement of which is provided in planes lying in or parallel to the transverse central axis (Q) of the gripper device (1) or to the longitudinal axis (L) of the suction device (2).

5. Apparatus according to claim 1 and 2, characterized in that the gripper device (1) has a suction head which detects the one side of an empty bag (LS).

6. Device according to claim 1 and one of claims 2 to 5, characterized in that the bag gripping device (1) has fingers (5) arranged in pairs in a common horizontal or vertical plane of the bag at a distance of the bag width or length (a) and moveable from an extended position into a curved position which encompasses the bag at least partially.

7. Use of the apparatus according to claim 1, characterized in that the suction device (2) takes up an empty bag (LS) from a pile of bags, the gripper device (1) pulls a filled bag (VS) from the filling nozzle (11), the empty bag (LS) is pushed on to the nozzle (11) and the filled bag (VS) is removed and palleted by the gripper device (1).

## Revendications

1. - Dispositif pour remplir et palettiser des sacs à valve, caractérisé par un bras de support, mobile de tous côtés, avec une tête placée à l'extrémité avant du bras, constitué d'un dispositif d'aspiration (2) aspirant le sac vide et d'un dispositif de saisie de sac (1) saisissant le sac (VS) rempli, le transportant et le palettisant, le dispositif d'aspiration (2) et le dispositif de saisie (1) étant placés conjointement sur la tête, suivant une disposition fixe dans l'espace.

2. - Dispositif selon la revendication 1 caractérisé en ce que le dispositif d'aspiration (2), en forme de tube ou de barre, est placé sur le dispositif de saisie (1), dans le plan (E) ou latéralement au-dessus ou au-dessous de celui-ci.

3. - Dispositif selon les revendications 1 et 2, caractérisé en ce qu'un axe médian transversal (Q) horizontal du dispositif de saisie (1) est parallèle à l'axe longitudinal (L) du dispositif d'aspiration (2).

4. - Dispositif selon la revendication 1 et l'une des revendications 2 ou 3, caractérisé en ce que le dispositif de saisie (1) comporte des doigts (5) ou des clapets, latéraux, pivotants, enfermant au moins en partie le sac rempli, dont le pivotement est prévu dans des plans qui passent par l'axe médian transversal (Q) du dispositif de prise (1) ou sont parallèles à celui-ci ou parallèle à l'axe longitudinal (L) du dispositif d'aspiration (2).

5. - Dispositif selon les revendications 1 et 2, caractérisé en ce que le dispositif de prise (1) comporte une tête d'aspiration qui saisit un côté d'un sac vide (LS).

6. - Dispositif selon la revendication 1 et l'une des revendications 2 à 5, caractérisé en ce que le dispositif de prise de sac (1) possède des doigts (5), disposés deux par deux dans un plan horizontal ou vertical du sac, à une distance correspondant à la largeur ou à la longueur du sac (a), passant d'une position tendue à une position courbée, entourant au moins partiellement le sac.

7. - Mise en oeuvre du dispositif selon la revendication 1, caractérisée en ce que le dispositif d'aspiration (2) reprend un sac vide (LS) d'une pile de sacs, le dispositif de prise (1) tire un sac rempli (VS) de la buse de remplissage (11), le sac vide (LS) est poussé sur la buse (11) et le sac rempli (VS) est évacué et palettisé par le dispositif de prise (1).

Fig.1

Fig.2

Fig.3

Fig.4

Fig.5

## Fig. 8

## Fig. 9

## Fig. 10

EP 0 343 472 B1

# Fig.6

# Fig.7

# Fig.11